(19) Europäisches Patentamt
European Patent Office
Office européen des brevets

(11) **EP 1 333 552 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(51) Int Cl.:
***H02H 1/00*** *(2006.01)*

(21) Anmeldenummer: **02028626.6**

(22) Anmeldetag: **20.12.2002**

(54) **Verfahren und Vorrichtung zur Detektion von Fehlerzuständen bei der Energieversorgung einer Last**

Method and apparatus for fault condition detection in the power supply to a load

Procédé et appareil pour la détection de conditions des défauts dans l'alimentation d'une charge

(84) Benannte Vertragsstaaten:
**AT CH DE ES FR GB LI**

(30) Priorität: **31.01.2002 DE 10204056**
**02.05.2002 DE 10219748**

(43) Veröffentlichungstag der Anmeldung:
**06.08.2003 Patentblatt 2003/32**

(73) Patentinhaber: **Siemens Aktiengesellschaft**
**80333 München (DE)**

(72) Erfinder:
• **Grosser, Stefan**
**92253 Schnaittenbach (DE)**
• **Maier, Mario**
**92266 Ensdorf (DE)**
• **Mark, Reinhard**
**91217 Hersbruck (DE)**
• **Singer, Monika**
**92263 Ebermannsdorf (DE)**

(56) Entgegenhaltungen:
EP-A- 0 563 684      DE-A1- 4 112 996
DE-A1- 19 833 984

**Beschreibung**

Die Erfindung betrifft ein Verfahren und eine Vorrichtung zur Detektion von Fehlerzuständen bei der Energieversorgung einer Last.

Es ist bereits bekannt, eine Drahtbrucherkennung und/oder eine Überlasterkennung dadurch zu realisieren, dass integrierte Ausgangstreiber verwendet werden, die die Drahtbrucherkennung und die Überlasterkennung "on chip" haben. Bei diesen Ausgangstreibern ist es nicht möglich, die Drahtbruch- bzw. Überlasterkennung zu parametrieren und den Verlauf der Stromaufnahme des Aktors bzw. der Last zu dokumentieren.

Aus der DE 42 10 420 C2 ist ein Überwachungsverfahren für einen technischen Prozess bekannt. Dabei ist ein den technischen Prozess überwachendes und steuerndes Automatisierungssystem vorgesehen, welches Meldungen über Fehler im technischen Prozess an ein übergeordnetes Beobachtungssystem übermittelt. Dieses wertet die Fehler aus uns stellt diese mittels eines Anzeigegerätes graphisch dar. Tritt ein Fehler in der Automatisierung selbst auf, beispielsweise ein Drahtbruch eines Peripherieanschlusses, dann wird ein solcher Fehler ebenfalls graphisch in seinen Auswirkungen angezeigt, beispielsweise durch farbiges Markieren oder Blinken des Anlagenteils, in dem der Fehler aufgetreten ist. Zusätzlich kann ein Meldetext auf dem Bildschirm ausgegeben und mittels eines Druckers als Fehlerliste ausgedruckt werden. Bei der graphischen Darstellung des Fehlerortes wird von Projektierungsdaten aus einem Projektierungsdatenspeicher Gebrauch gemacht, wobei diese Daten von einem Prozessor ausgelesen und verarbeitet werden. Informationen darüber, wie das Vorliegen eines Drahtbruchs erkannt wird, sind in der DE 42 10 420 C2 nicht angegeben.

Aus der DE 198 33 984 A1 ist eine Schutzschalteinrichtung mit mindestens zwei zwischen einem Betriebsspannungseingang und einem Schaltausgang für eine Last verlaufenden Strompfaden bekannt. Um einen zuverlässigen Schutz des Laststromkreises und dessen Komponenten im Fehlerfall zu gewährleisten, ist in jedem Strompfad ein elektronischer Schalter vorgesehen, der mit einem Steuersystem zum Überwachen und allpoligen Abschalten des Laststromkreises verbunden ist. Zur Funktionsüberwachung werden insbesondere für den Schaltzustand der elektronischen Schalter charakteristische Betriebsparameter, wie beispielsweise deren Leckstrom oder Spannungspegel, sowie der über den oder jeden Strompfad fließende Laststrom herangezogen. Dabei kommt ein im Strompfad selbst angeordneter Messwiderstand zur Anwendung, welcher über Signalleitungen mit einem Steuersystem verbunden ist. Zu einer Drahtbrucherkennung überwacht das Steuersystem die Abweichung des in mindestens einem Strompfad erfassten Stroms von einem Referenzwert. Unterschreitet im ausgeschalteten Zustand der Last der über den oder die Schalter fließende Leckstrom einen Mindeststromwert oder unterschreitet im eingeschalteten Zustand der Last ein vorgegebener Minimalstrom eine Untergrenze, so wird auf Drahtbruch im Laststromkreis erkannt. Alternativ dazu kann auch ein Spannungspegel gemessen und mit einem entsprechenden Minimalpegel verglichen werden. Weiterhin wird im eingeschalteten Zustand der Last bei einer Abweichung des in mindestens einem Strompfad erfassten Laststroms von einem vorgegebenen Referenzwert ein Überlastzustand erkannt.

Ein Nachteil der aus der DE 198 33 984 A1 bekannten Schutzschalteinrichtung besteht darin, dass der verwendete Messwiderstand im Strompfad selbst angeordnet ist. Dies führt im Normalbetrieb der Schutzschalteinrichtung zu einer unerwünschten Wärmebildung bzw. Verlustleistung.

Die Aufgabe der Erfindung besteht darin, einen Weg zur Reduzierung unerwünschter Verlustleistung aufzuzeigen.

Diese Aufgabe wird durch eine Vorrichtung mit den im Anspruch 1 und durch ein Verfahren mit den im Anspruch 18 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass aufgrund der Parallelschaltung des Messwiderstandes zum "normalen" Signalweg im Normalbetrieb der Vorrichtung keine permanente Wärmebildung im Messwiderstand erfolgt, so dass die insgesamt entstehende Verlustleistung reduziert ist. Der Signalweg über den Messwiderstand wird nur während kurzer Messzeitintervalle durchlässig geschaltet. Die Zeitabstände zwischen aufeinanderfolgenden Messzeitintervallen sind vom jeweiligen Anwendungsfall abhängig und können beispielsweise im Minutenbereich liegen. Ein Messzeitintervall selbst kann beispielsweise 1 ms betragen. Die in diesen kurzen Messzeitintervallen entstehende Verlustleistung ist vernachlässigbar klein.

Weitere Vorteile der Erfindung bestehen darin, dass sie beim Vorliegen eines digitalen Ausgangs eine Parametrierung der Drahtbruch- und Überlasterkennungsgrenzen zulässt. Weiterhin bietet die Erfindung die Möglichkeit, in einen fehlersicheren Ausgang integrierbar zu sein bzw. in der Automatisierungstechnik verwendbar zu sein, insbesondere im Zusammenhang mit einer dezentralen Anordnung von mit Energie zu versorgenden Baugruppen. Beispielsweise ist die Erfindung dazu geeignet, bei Ausgabebaugruppen eine Drahtbruch- und Überlasterkennung durchzuführen.

Weiterhin eröffnet die Erfindung auch die Möglichkeit, durch ein Abspeichern der gemessenen Stromwerte eine statistische Auswertung der Alterung eines Aktors vorzunehmen. Dies erlaubt ein frühzeitiges Erkennen eines bevorstehenden Ausfalls eines Aktors. Dies bedeutet für die Praxis einen großen Vorteil, da ca. 50% der gefährlichen Ausfälle in einem Sicherheitskreis auf einen Ausfall von Aktoren zurückzuführen sind.

Wird eine Messung der gelieferten Versorgungsgleichspannung durchgeführt, dann kann der Messfehler, der durch den Messwiderstand bei unterschiedlich hohen Versorgungsgleichspannungen entsteht, berechnet und berücksichtigt werden.

Zur Verbesserung der Genauigkeit der Strommessung, insbesondere bei einer Messung kleiner Ströme, wird eine Nullstrom-Referenzmessung durchgeführt. Der gemessene Nullstrom-Referenzwert wird vom jeweils erhaltenen Messwert subtrahiert. Dadurch werden in vorteilhafter Weise Fehler von verwendeten Operationsverstärkern ausgeglichen.

Weitere vorteilhafte Eigenschaften der Erfindung ergeben sich aus deren beispielhafter Erläuterung anhand der Figuren. Es zeigt:

Figur 1     ein Blockschaltbild eines ersten Ausführungsbeispiels für die Erfindung und

Figur 2     ein Blockschaltbild eines zweiten Ausführungsbeispiels für die Erfindung.

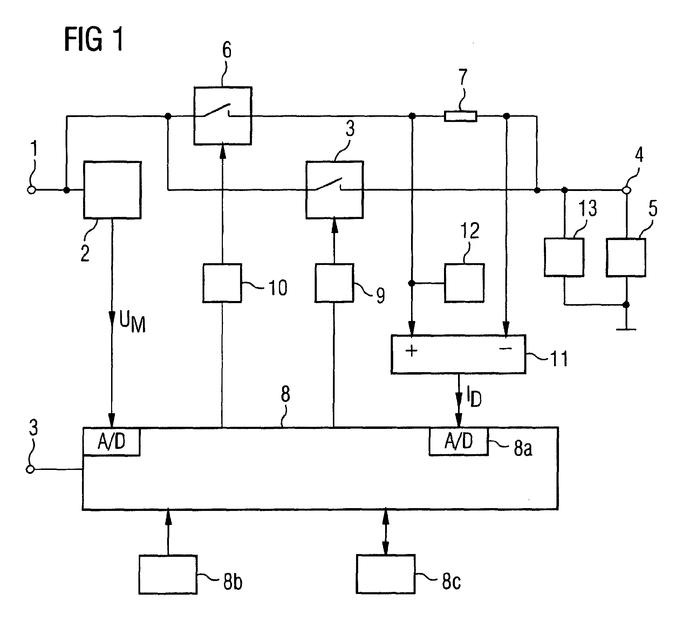

Die Figur 1 zeigt ein Blockschaltbild eines ersten Ausführungsbeispiels für die Erfindung. Gemäß diesem Ausführungsbeispiel wird eine an den Ausgang 4 angeschlossene Last 5, die Aktoren und Sensoren aufweist, mit einer am Eingang 1 anliegenden Versorgungsgleichspannung von +24V versorgt. Diese Versorgung erfolgt über einen Ausgangstreiber 3. Dieser erhält von einem Controller 8 über eine Ansteuerlogik 9 Steuersignale zugeführt, mittels welcher der Ausgangstreiber aktiviert und deaktiviert werden kann. Ist der Ausgangstreiber aktiviert, d. h. durchlässig geschaltet, dann ist der Ausgang 4 mit dem Eingang 1 verbunden. Ist der Ausgangstreiber deaktiviert, d. h. nicht durchlässig geschaltet, dann ist der Signalweg über den Ausgangstreiber gesperrt.

Parallel zum Ausgangstreiber 3 ist eine Reihenschaltung eines zweiten Ausgangstreibers 6 mit einem Messwiderstand 7 vorgesehen. Der zweite Ausgangstreiber 6 wird über eine Ansteuerlogik 10 vom Controller 8 mit Steuersignalen beaufschlagt, die den Ausgangstreiber 6 durchlässig schalten oder sperren. Ist der Ausgangstreiber 6 durchlässig geschaltet, dann ist der Ausgang 4 über den Messwiderstand 7 und den leitenden Ausgangstreiber 6 mit der Eingangsseite verbunden.

Parallel zur Last 5 ist eine Löschdiodenvorrichtung 13 geschaltet, über welche nach einem Ausschalten der Last 5 ein Löschen bzw. ein Abbau der gespeicherten Energie bei induktiven Lasten erfolgen kann.

Dem Eingang 1 ist ein Spannungsmesser 2 nachgeschaltet, welcher zur Messung der am Eingang 1 anliegenden Versorgungsgleichspannung vorgesehen ist. Der vom Spannungsmesser 2 erhaltene Spannungsmesswert UM wird dem Controller 8 zugeführt. Dieser erkennt anhand des Spannungsmesswertes ein Vorliegen von Schwankungen der Versorgungsgleichspannung und berücksichtigt diese Spannungsschwankungen bei der Ermittlungen von Fehlerzuständen.

Ein Anschluss des Messwiderstandes 7 ist mit dem positiven Eingang eines Differenzverstärkers 11 verbunden. Der andere Anschluss des Messwiderstandes 7 ist an den negativen Eingang des Differenzverstärkers angeschlossen. Dies erlaubt eine Messung des Spannungsabfalls am Messwiderstand 7, indem im Differenzverstärker 11 die diesem zugeführten Stromsignale voneinander subtrahiert und das erhaltene Differenzsignal nach einer geeigneten Verstärkung dem A/D-Wandler-Eingang 8a des Controllers 8 zugeführt wird. Im Controller 8 erfolgt ein Vergleich des Differenzsignals $I_D$ mit vorgegebenen, in einem Speicher des Controllers hinterlegten Schwellenwerten, um eine Drahtbrucherkennung und eine Überlasterkennung durchzuführen. Ist das erhaltene Differenzsignal kleiner als ein vorgegebener erster Schwellenwert, der beispielsweise 20mA beträgt, dann erkennt der Controller 8 das Vorliegen eines Drahtbruches und meldet das Vorliegen eines Drahtbruches an eine übergeordnete Steuerung. Diese leitet dann geeignete Maßnahmen in die Wege. Ist das erhaltene Differenzsignal größer als ein vorgegebener zweiter Schwellenwert, der beispielsweise 2,4A beträgt, dann erkennt der Controller 8 das Vorliegen einer Überlast und meldet das Vorliegen einer Überlast an eine übergeordnete Steuerung. Diese leitet dann geeignete Maßnahmen in die Wege.

In vorteilhafter Weise erfolgt die Messung des Spannungsabfalls am Messwiderstand 7 nur während kurzer Messzeitintervalle. Diese haben beispielsweise eine Dauer von 1 ms. Die Abstände aufeinanderfolgender Messzeitintervalle sind vom jeweiligen konkreten Anwendungsfall abhängig und können beispielsweise im Minutenbereich liegen. Der zeitliche Ablauf wird durch den Controller 8 gesteuert und ist wie folgt:

In einem ersten Schritt schaltet der Controller 8 den Ausgangstreiber 6 über die Ansteuerlogik 10 durchlässig, so dass der Ausgang 4 über den Messwiderstand 7 und den Ausgangstreiber 6 mit dem Eingang 1 verbunden ist. Danach deaktiviert der Controller 8 in einem zweiten Schritt über die Ansteuerlogik 9 den Ausgangstreiber 3, so dass der Hauptsignalweg zwischen dem Eingang 1 und dem Ausgang 4 unterbrochen ist. In diesem Messzeitintervall tritt am Messwiderstand 7 ein Spannungsabfall auf, der ausgewertet wird, um dem Controller 8 ein den Spannungsabfall charakterisierendes Differenzsignal zur Verfügung zu stellen.

Ist das kurze Messzeitintervall beendet, dann führt der Controller 8 dem im Hauptsignalweg angeordneten Ausgangstreiber 3 ein diesen wieder aktivierendes Steuersignal zu, so dass die am Ausgang 4 anliegende Last 5 wieder über den Hauptsignalweg mit dem Ausgangstreiber 3 mit Energie versorgt wird. Anschließend öffnet der Controller 8 über die Ansteuerlogik 10 den Ausgangstreiber 6, so dass der Messsignalweg wieder aufgetrennt ist.

Da der Messwiderstand 7 nur während der kurzen Messzeitintervalle aktiviert ist, ist die insgesamt entstehende Verlustleistung im Vergleich zu Lösungen, bei denen sich der Messwiderstand im Hauptsignalweg befindet, stark reduziert.

Die Schwellenwerte, die im Controller 8 hinterlegt sind und zur Drahtbruch- und Überlasterkennung verwendet werden, sind in vorteilhafter Weise mittels der Bedieneinheit 8b veränderbar. Dies erlaubt es, bei einer bereits in Betrieb genommenen Anlage bei Bedarf schnell und einfach eine Anpassung der Schwellenwerte an jeweils vorliegende Betriebsverhältnisse durchzuführen. Die im Rahmen dieser Parametrierung neu eingegebenen Schwellenwerte werden anstelle der vorhandenen Schwellenwerte im Speicher des Controllers hinterlegt und bei der Auswertung berücksichtigt.

Weiterhin wird im Controller 8 auch der vom Spannungsmesser 2 gelieferte Spannungsmesswert UM zur Berechnung des Messfehlers verwendet, der durch den Messwiderstand 7 bei unterschiedlich hohen Versorgungsgleichspannungen entsteht. Dies bedeutet mit anderen Worten, dass der Controller 8 in Abhängigkeit vom ermittelten Spannungsmesswert UM das im zugeführte Differenzsignal $I_D$, das Auskunft über den Spannungsabfall am Messwiderstand 7 gibt, einem Korrekturvorgang unterwirft, durch welchen Schwankungen der am Eingang 1 vorliegenden Versorgungsgleichspannung kompensiert werden.

Ferner wird zur Verbesserung der Genauigkeit des Messvorgangs, was insbesondere beim Vorliegen kleiner Ströme vorteilhaft ist, bei durchlässig geschaltetem Ausgangstreiber 3 eine Nullstrom-Referenzmessung durchgeführt. Der ermittelte Nullstrom-Referenzwert wird im Controller 8 abgespeichert und zum Erhalt eines korrigierten Differenzsignals vom erhaltenen Differenzsignal subtrahiert. Aufgrund dieser Nullstrom-Referenzmessung können beispielsweise Fehler verwendeter Operationsverstärker kompensiert werden.

Der mit dem positiven Eingang des Differenzverstärkers 11 verbundene Referenzspannungsteiler 12 bewirkt eine Anhebung des Strommesswertes gegenüber 0V, um der Tatsache gerecht zu werden, dass die vorhandenen Operationsverstärker nicht bis 0V verstärken. Der durch diese Anhebung entstehende Fehler wird durch die vorstehend beschriebene Nullstrom-Referenzmessung wieder ausgeglichen.

Die vom Controller 8 im Rahmen der Drahtbruch- bzw. Überlasterkennung verwendete Formel zur Berechnung des korrigierten Stromistwertes, der mit den Schwellenwerten verglichen wird, lautet wie folgt:

$$I \; = \; \frac{U_M \bullet U_{ref} \: / \: Aufl \bullet (Wert - Wert\_zero)}{(U_M - U_{ref} \: / \: Aufl \bullet (Wert - Wert\_zero)) \bullet R}$$

wobei

I = Strom durch den Lastwiderstand 5 in A,
$U_M$ = Versorgungsspannung der Schaltung in V,
$U_{ref}$ = Referenzspannung des A/D-Wandlers 8a in V,
Aufl = Auflösung des A/D-Wandlers 8a in Digit,
Wert = Messwert des Ausgangsstroms in Digit,
Wert_zero = Messwert der Nullstrom-Referenzmessung in Digit, und
R = Widerstandswert des Messwiderstands 7 in Ohm ist.

Gemäß einer vorteilhaften Weiterbildung der Erfindung werden in einem dem Controller 8 zugeordneten Speicher 8c Daten abgespeichert, die den zeitlichen Verlauf der Stromaufnahme der Last 5 dokumentieren. Diese Daten werden im Controller 8 durch Auswertung des ihm zugeführten Differenzsignals ermittelt. Der Controller wertet den zeitlichen Verlauf dieser Daten aus, um rechtzeitig einen alterungsbedingten Ausfall eines zur Last 5 gehörigen Aktors zu erkennen. Erkennt der Controller 8 einen bevorstehenden Ausfall eines Aktors, dann meldet er diesen bevorstehenden Ausfall an die übergeordnete Steuerung weiter, die dann entsprechende Maßnahmen in die Wege leitet.

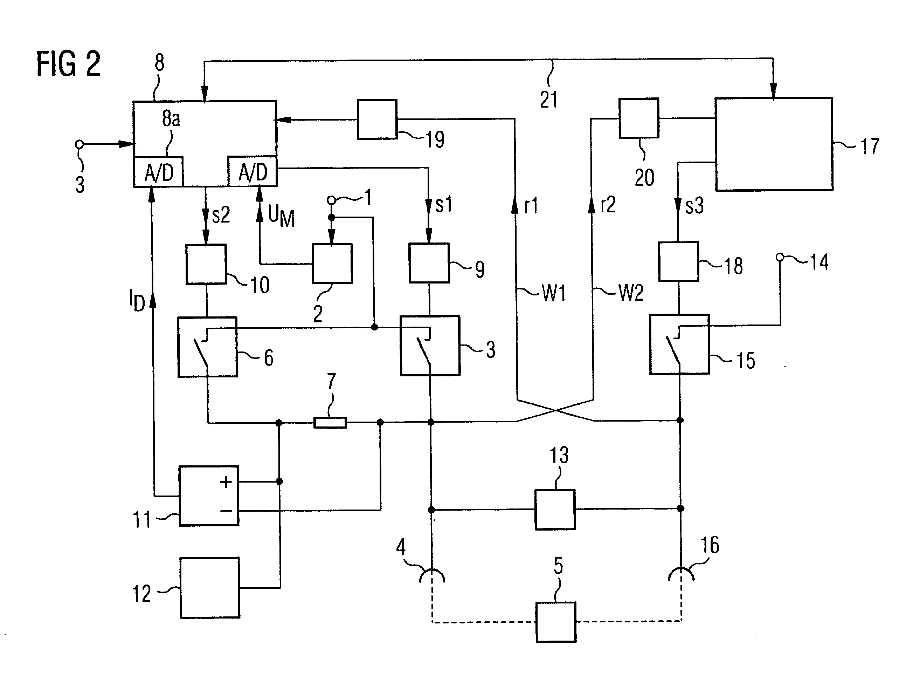

Die Figur 2 zeigt ein Blockschaltbild eines zweiten Ausführungsbeispiels für die Erfindung. Dieses zweite Ausführungsbeispiel betrifft eine sicherheitskritische bzw. fehlersichere Anwendung, wie sie beispielsweise bei Seilbahnen, Brennersteuerungen in einem Kraftwerk und bei Pressen erfolgen kann.

Bei der in der Figur 2 gezeigten Last 5 handelt es sich beispielsweise um eine Bremse eines Motors, welcher über die in der Figur dargestellte Steuerungsbaugruppe eine Versorgungsgleichspannung zugeführt wird. Die Last 5 ist an Ausgänge 4 und 16 der Steuerungsbaugruppe angeschlossen.

Die gezeigte Steuerungsbaugruppe ist - um die geforderte Sicherheitsnorm zu erfüllen - zweikanalig ausgebildet, wobei die beiden Kanäle parallel, unabhängig voneinander und zeitsynchron arbeiten.

Der erste Kanal weist einen ersten Eingang 1 auf, über welchen der gezeigten Baugruppe eine positive Versorgungsgleichspannung von +24V zugeführt wird, die über einen Spannungsmesser 2 an einen Ausgangstreiber 3 angelegt ist. Weiterhin ist der Ausgang des Spannungsmessers 2 auch mit einem Ausgangstreiber 6 verbunden, zu welchem in Reihe ein Messwiderstand 7 angeordnet ist. Der vom Ausgangstreiber 6 abgewandte Anschluss des Messwiderstandes 7 ist mit dem Ausgang des Ausgangstreibers 3 verbunden, so dass die Reihenschaltung aus Ausgangstreiber 6 und Messwiderstand 7 parallel zum Ausgangstreiber 3 angeordnet ist. Der Ausgang der genannten Parallelschaltung bildet den Ausgang 4 der Steuerungsbaugruppe, an welchen die Last 5 angeschlossen ist.

Der dem Ausgangstreiber 6 zugewandte Anschluss des Messwiderstandes 7 ist mit dem positiven Eingang eines Differenzverstärkers 11 und der vom Ausgangstreiber 6 abgelegene Anschluss des Messwiderstandes 7 mit dem negativen Eingang des Differenzverstärkers 11 verbunden. An den positiven Eingang des Differenzverstärkers 11 ist weiterhin ein Referenzspannungsteiler 12 angeschlossen. Der Ausgang des Differenzverstärkers 11 ist mit dem A/D-Wandler-Eingang 8a des ersten Controllers 8 verbunden.

Dem ersten Controller 8 werden als Eingangssignale das Ausgangssignal $I_D$ des Differenzverstärkers 11, der vom Spannungsmesser 2 gelieferte Spannungsmesswert UM, ein über den Eingang 3 angeliefertes Steuersignal und ein über einen ersten Rücklesepfad W1, der eine Spannungsanpassungsschaltung 19 aufweist, geliefertes Rücklesesignal r1 zugeführt. Weiterhin ist der erste Controller 8 mit dem im zweiten Kanal angeordneten zweiten Controller 17 über eine bidirektionale Controllerschnittstelle 21 kontaktiert.

Als Ausgangssignale generiert der erste Controller 8 ein Steuersignal s1, welches dem Ausgangstreiber 3 über eine Ansteuerlogik 9 zugeführt wird, sowie ein Steuersignal s2, welches dem Ausgangstreiber 6 über eine Ansteuerlogik 10 zugeführt wird. Die Steuersignale s1 und s2 dienen zum Aktivieren und Deaktivieren der Ausgangstreiber 3 und 6.

Dem zweiten Kanal wird über den Eingang 14 die zur Versorgungsgleichspannung zugehörige Masse (0V) zugeführt. Diese ist bei aktiviertem Ausgangstreiber 15 mit dem Ausgang 16 der Steuerungsbaugruppe verbunden. Ist der Ausgangstreiber 15 deaktiviert, dann ist der Ausgang 16 vom Eingang 14 abgetrennt. Die Aktivierung und Deaktivierung des Ausgangstreibers 15 erfolgt durch den Controller 17, der dem Ausgangstreiber 15 über die Ansteuerlogik 18 Steuersignale s3 zuführt.

Als Eingangssignale erhält der zweite Controller 17 Signale, die ihm vom ersten Controller 8 über die bidirektionale Controllerschnittstelle 21 geliefert werden, sowie Rücklesesignale r2. Die Rücklesesignale r2 werden dem zweiten Controller 17 über einen Rücklesepfad W2 zugeführt, in welchem eine Spannungsanpassungsschaltung 20 angeordnet ist.

Die dem ersten Controller 8 zugeleiteten Rücklesesignale r1 werden vom Ausgang 16 des zweiten Kanals abgeleitet. Die dem zweiten Controller 17 zugeleiteten Rücklesesignale r2 werden vom Ausgang 4 des ersten Kanals abgeleitet. Da diese Rücklesesignale eine Information über den Signalzustand am jeweiligen Ausgang enthalten, wird beispielsweise ein fehlerhaftes Arbeiten des ersten Kanals vom Controller 17 des zweiten Kanals erkannt und direkt oder über die Controllerschnittstelle 21 und den ersten Controller 8 an die übergeordnete Steuerung gemeldet, die dann geeignete Maßnahmen in die Wege leitet und der Controller 17 leitet ein Abschalten der Ausgänge von 6, 3 und 15 ein, um den sicheren Zustand herzustellen. Ebenso wird ein fehlerhaftes Arbeiten des zweiten Kanals vom Controller 8 des ersten Kanals erkannt und direkt oder über den Controller 17 des zweiten Kanals an die übergeordnete Steuerung gemeldet, die dann geeignete Maßnahmen in die Wege leitet und der Controller 8 leitet ein Abschalten der Ausgänge von 6, 3 und 15 ein, um den sicheren Zustand herzustellen.

Die fehlerhafte Arbeitsweise im jeweils anderen Kanal kann von den Controllern deshalb erkannt werden, da von außen zugeführte Befehle, beispielsweise Einschalt- oder Not-Aus-Befehle dem ersten Controller 8 über den Eingang 3 zugeführt werden und der erste Controller 8 diese Befehle sowie Signale zu einer Zeitsynchronisierung beider Controller dem zweiten Controller 17 über die Controllerschnittstelle 21 übermittelt. Da im Normalbetrieb beide Controller und damit beide Kanäle parallel und unabhängig zueinander zeitsynchron arbeiten, ist jedem Controller bekannt, welche Signale zu einem gegebenen Zeitpunkt am Ausgang des jeweils anderen Kanals vorliegen müssen. Liegen diese Signale nicht vor, dann liegt ein meldepflichtiger Fehler vor.

Die zwischen die Ausgänge 4 und 16 geschaltete Vorrichtung 13 ist eine Löschdiodenvorrichtung, über welche nach einem Ausschalten der Last 5 ein Abbau der gespeicherten Energie erfolgt.

Die Figur 2 zeigt demnach die Integration einer Vorrichtung zur Detektion von Fehlerzuständen, wie sie bereits oben im Zusammenhang mit der Figur 1 erläutert wurde, in einer sicherheitskritischen Anwendung, die mit zwei parallelen Kanälen arbeitet. Die einzelnen Bauteile, deren Arbeitsweise oben im Zusammenhang mit der Figur 1 erläutert wurde, sind in der Figur 2 mit denselben Bezugszeichen versehen wie in der Figur 1.

Mittels der in der Figur 2 dargestellten Gesamtvorrichtung kann beispielsweise ein Vorliegen eines Drahtbruches und eines Überlastzustandes im p-Kanal detektiert werden, d. h. auf der Versorgungsleitung, die über den Ausgang 4 zur Last 5 führt.

Eine Vorrichtung, wie sie in der Figur 1 gezeigt ist, kann selbstverständlich auch in den zweiten Kanal der Vorrichtung gemäß Figur 2 integriert sein, um auch ein Vorliegen eines Drahtbruches und eines Überlastzustandes im n-Kanal zu detektieren, d. h. auf der Versorgungsleitung, die über den Ausgang 16 zur Last führt. Eine derartige Vorrichtung im zweiten Kanal ist jedoch aus Gründen der Übersichtlichkeit in der Figur 2 nicht dargestellt.

Nach alledem zeigt die Erfindung einen Weg, wie in der Automatisierungstechnik, insbesondere beim Vorliegen dezentral angeordneter Ausgabebaugruppen, die Forderung nach einer Drahtbruch- und einer Überlasterkennung erfüllt werden kann. Die Erfindung ermöglicht eine Parametrierung der Drahtbruch- und Überlasterkennungsgrenzen und ist auch bei fehlersicheren Anwendungen einsetzbar, bei denen digitale Ausgänge vorliegen. Weiterhin bietet die Erfindung die Möglichkeit, Aussagen über den Alterungsprozess von der Last zugehörigen Aktoren zu gewinnen und einen bevorstehenden Ausfall eines Aktors rechtzeitig zu erkennen. Dadurch kann rechtzeitig ein Austausch des jeweiligen Aktors vorgenommen werden, was insbesondere bei sicherheitskritischen Anwendungen von großem Vorteil ist.

**Patentansprüche**

1. Vorrichtung zur Detektion von Fehlerzuständen bei der Energieversorgung einer Last (5), mit

- einem Eingang (1) für eine Versorgungsgleichspannung,
- einem Ausgang (4) für die Versorgungsgleichspannung,
- einem zwischen dem Eingang (1) und dem Ausgang (4) angeordneten ersten Ausgangstreiber (3),
- einem Messwiderstand (7), und
- einem ersten Controller (8), welcher zur Ansteuerung des ersten Ausgangstreibers (3) vorgesehen ist und welchem vom Messwiderstand (7) abgeleitete Messsignale zugeführt werden,
**dadurch gekennzeichnet, dass**
- der Messwiderstand (7) in Reihe mit einem zweiten Ausgangstreiber (6) angeordnet ist,
- die Reihenschaltung des zweiten Ausgangstreibers (6) mit dem Messwiderstand (7) parallel zum ersten Ausgangstreiber (3) angeordnet ist,
- der erste Controller (8) zur Ansteuerung des zweiten Ausgangstreibers (6) vorgesehen ist, und
- der erste Controller (8) dazu vorgesehen ist, den zweiten Ausgangstreiber (6) nur für kurze Messzeitintervalle zu aktivieren, so dass der Messwiderstand (7) nur für die Dauer dieser kurzen Messzeitintervalle zwischen den Eingang (1) und den Ausgang (4) geschaltet ist, und den ersten Ausgangstreiber (3) für die Dauer der kurzen Messzeitintervalle zu deaktivieren.

2. Vorrichtung nach Anspruch 1, **dadurch gekennzeichnet, dass** sie zur Messung des Spannungsabfalls am Messwiderstand (7) vorgesehen ist.

3. Vorrichtung nach Anspruch 2, **dadurch gekennzeichnet, dass** ein Anschluss des Messwiderstandes (7) mit einem ersten Eingang (+) eines Differenzverstärkers (11) und der andere Anschluss des Messwiderstandes (7) mit einem zweiten Eingang (-) des Differenzverstärkers (11) verbunden ist und dass der Ausgang des Differenzverstärkers (11) mit dem ersten Controller (8) verbunden ist.

4. Vorrichtung nach Anspruch 3, **dadurch gekennzeichnet, dass** der Ausgang des Differenzverstärkers (11) mit einem A/D-Wandler-Eingang (8a) des ersten Controllers (8) verbunden ist.

5. Vorrichtung nach einem der vorhergehenden Ansprüche, **dadurch gekennzeichnet, dass** der erste Controller (8) die ihm zugeführten Differenzsignale ($I_D$) mit vorgegebenen Schwellenwerten vergleicht, um eine Drahtbruch- und/oder eine Überlasterkennung durchzuführen.

6. Vorrichtung nach Anspruch 5, **dadurch gekennzeichnet, dass** die vorgegebenen Schwellenwerte mittels einer mit dem ersten Controller (8) verbundenen Bedieneinheit (8b) veränderbar sind.

7. Vorrichtung nach einem der vorhergehenden Ansprüche, **dadurch gekennzeichnet, dass** sie einen zur Messung der Versorgungsgleichspannung vorgesehenen Spannungsmesser (2) aufweist, der einen mit dem ersten Controller (8) verbunden Ausgang aufweist.

8. Vorrichtung nach Anspruch 7, **dadurch gekennzeichnet, dass** der erste Controller (8) unter Verwendung des vom Spannungsmesser (2) generierten Spannungsmesswertes (UM) einen Messfehler berechnet.

9. Vorrichtung nach einem der vorhergehenden Ansprüche, **dadurch gekennzeichnet, dass** sie zur Durchführung einer Nullstrom-Referenzmessung vorgesehen ist.

10. Vorrichtung nach Anspruch 9, **dadurch gekennzeichnet, dass** der erste Controller (8) den ermittelten Nullstrom-Referenzwert von dem ihm zugeführten Differenzsignal ($I_D$) subtrahiert.

**11.** Vorrichtung nach einem der vorhergehenden Ansprüche, **dadurch gekennzeichnet, dass** sie einen Speicher (8c) aufweist, der zur Abspeicherung von Daten vorgesehen ist, die den zeitlichen Verlauf der Stromaufnahme der Last (5) beschreiben.

**12.** Vorrichtung nach Anspruch 11, **dadurch gekennzeichnet, dass** der erste Controller (8) zur Auswertung der abgespeicherten Daten vorgesehen ist, um einen bevorstehenden Ausfall eines Aktors zu erkennen.

**13.** Vorrichtung nach einem der vorhergehenden Ansprüche, **dadurch gekennzeichnet, dass** sie eine Parallelschaltung zweier Kanäle aufweist, die jeweils einen Eingang (1, 14) für eine Versorgungsgleichspannung, einen Ausgang (4, 16) für die Versorgungsgleichspannung, einen zwischen dem jeweiligen Eingang (1, 14) und dem jeweiligen Ausgang (4, 16) angeordneten Ausgangstreiber (3, 15) und einen jeweiligen Controller (8, 17) aufweisen, der zur Ansteuerung des jeweiligen Ausgangstreibers (3, 15) vorgesehen ist, wobei dem Eingang (1) des ersten Kanals eine positive Versorgungsgleichspannung und dem Eingang (14) des zweiten Kanals die zugehörige Masse (O V) der Versorgungsgleichspannung zuführbar sind.

**14.** Vorrichtung nach Anspruch 13, **dadurch gekennzeichnet, dass** sie einen Rücklesepfad (W1, W2) aufweist, über welchen vom Ausgang (4, 16) abgeleitete Rücklesesignale (r1, r2) übertragen werden.

**15.** Vorrichtung nach Anspruch 14, **dadurch gekennzeichnet, dass** sie einen vom Ausgang (4) des ersten Kanals ausgehenden Rücklesepfad (W2) aufweist, der an den im zweiten Kanal angeordneten Controller (17) geführt ist, und einen vom Ausgang (16) des zweiten Kanals ausgehenden Rücklesepfad (W1) aufweist, der an den im ersten Kanal angeordneten Controller (8) geführt ist.

**16.** Vorrichtung nach einem der Ansprüche 13, 14 oder 15, **dadurch gekennzeichnet, dass** die Controller (8, 17) beider Kanäle über eine Schnittstelle (21) miteinander kontaktiert sind.

**17.** Verfahren zur Detektion von Fehlerzuständen bei der Energieversorgung einer Last (5), welche über einen ersten Ausgangstreiber (3) mit einem Eingang (1) für eine Versorgungsgleichspannung verbunden ist, wobei parallel zum ersten Ausgangstreiber (3) eine Reihenschaltung eines zweiten Ausgangstreibers (6) mit einem Messwiderstand (7) vorgesehen ist, **dadurch gekennzeichnet, dass** der zweite Ausgangstreiber (6) nur für kurze Messzeitintervalle aktiviert wird, um den Messwiderstand (7) nur für die Dauer dieser kurzen Messzeitintervalle zwischen den Eingang (1) für die Versorgungsgleichspannung und die Last (5) zu schalten, und dass der erste Ausgangstreiber (3) für die Dauer der kurzen Messzeitintervalle deaktiviert wird.

**18.** Verfahren nach Anspruch 17, **dadurch gekennzeichnet, dass** während der Messzeitintervalle der Spannungsabfall am Messwiderstand (7) gemessen wird.

**19.** Verfahren nach Anspruch 18, **dadurch gekennzeichnet, dass** von einem Anschluss des Messwiderstandes (7) Messsignale an einen ersten Eingang (+) eines Differenzverstärkers (11) geführt werden, vom zweiten Anschluss des Messwiderstandes (7) Messsignale an einen zweiten Eingang (-) des Differenzverstärkers (11) geführt werden und die mittels des Differenzverstärkers (11) generierten Differenzsignale ($I_D$) einem ersten Controller (8) zugeführt werden.

**20.** Verfahren nach Anspruch 19, **dadurch gekennzeichnet, dass** der erste Controller (8) die Differenzsignale ($I_D$) mit vorgegebenen Schwellenwerten vergleicht, um eine Drahtbruch- und/oder eine Überlasterkennung durchzuführen.

**21.** Verfahren nach einem der Ansprüche 17 bis 20, **dadurch gekennzeichnet, dass** die am Eingang (1) vorliegende Versorgungsgleichspannung gemessen wird und der erhaltene Messwert (UM) zur Berechnung eines Messfehlers verwendet wird.

**22.** Verfahren nach einem der Ansprüche 17 bis 21, **dadurch gekennzeichnet, dass** eine Nullstrom-Referenzmessung durchgeführt wird.

**23.** Verfahren nach Anspruch 22, **dadurch gekennzeichnet, dass** der ermittelte Nullstrom-Referenzwert von den ermittelten Differenzsignalen ($I_D$) subtrahiert wird.

**24.** Verfahren nach einem der Ansprüche 17 bis 23, **dadurch gekennzeichnet, dass** den zeitlichen Verlauf der Stromaufnahme der Last (5) beschreibende Daten abgespeichert werden.

**25.** Verfahren nach Anspruch 24, **dadurch gekennzeichnet, dass** die abgespeicherten Daten ausgewertet werden, um einen bevorstehenden Ausfall eines Aktors zu erkennen.

**Claims**

**1.** Apparatus for detecting fault conditions in the energy supply of a load (5), having

- an input (1) for a DC supply voltage,
- an output (4) for the DC supply voltage,
- a first output driver (3) arranged between the input (1) and the output (4),
- a measuring resistor (3), and
- a first controller (8), which is provided for controlling the first output driver (3) and to which measurement signals derived from the measuring resistor (7) are fed,
**characterised in that**
- the measuring resistor (7) is arranged in series with a second output driver (6),
- the series connection of the second output driver (6) to the measuring resistor (7) is arranged in parallel to the first output driver (3),
- the first controller is provided (8) for controlling the second output driver (6), and
- the first controller (8) is provided for activating the second output driver (6) only for short measuring time intervals, so that the measuring resistor (7) is connected only for the duration of these short measuring time intervals between the input (1) and the output (4), and for deactivating the first output driver (3) for the duration of the short measuring time intervals.

**2.** Apparatus according to claim 1, **characterised in that** it is provided for measuring the voltage drop at the measuring resistor (7).

**3.** Apparatus according to claim 2, **characterised in that** one terminal of the measuring resistor (7) is connected to a first input (+) of a differential amplifier (11) and the other terminal of the measuring resistor (7) is connected to a second input (-) of the differential amplifier (11) and that the output of the differential amplifier (11) is connected to the first controller (8).

**4.** Apparatus according to claim 3, **characterised in that** the output of the differential amplifier (11) is connected to an A/D converter input (8a) of the first controller (8).

**5.** Apparatus according to one of the preceding claims, **characterised in that** the first controller (8) compares the differential signals ($I_D$) fed to it with predetermined threshold values in order to perform a wire-break detection and/or an overload detection.

**6.** Apparatus according to claim 5, **characterised in that** the predetermined threshold values can be varied by means of a control unit (8b) connected to the first controller (8).

**7.** Apparatus according to one of the preceding claims, **characterised in that** it has a voltmeter (2) provided for measuring the DC supply voltage and with an output connected to the first controller (8).

**8.** Apparatus according to claim 7, **characterised in that** the first controller (8) calculates a measurement error using the voltage measurement value (UM) generated by the voltmeter (2).

**9.** Apparatus according to one of the preceding claims, **characterised in that** it is provided for performing a zero-current reference measurement.

**10.** Apparatus according to claim 9, **characterised in that** the first controller (8) subtracts the determined zero-current reference value from the differential signal ($I_D$) fed to it.

**11.** Apparatus according to one of the preceding claims, **characterised in that** it has a memory (8c) which is provided for storing data describing the time progression of the current consumption of the load (5).

**12.** Apparatus according to claim 11, **characterised in that** the first controller (8) is provided for evaluating the stored data, in order to identify an impending failure of an actuator.

**13.** Apparatus according to one of the preceding claims, **characterised in that** it has a parallel connection of two channels, each having an input (1, 14) for a DC supply voltage, an output (4, 16) for the DC supply voltage, an output driver (3, 15) arranged between the respective input (1, 14) and the respective output (4, 16), and a respective controller (8, 17) which is provided for controlling the respective output driver (3, 15), wherein a positive DC supply voltage can be fed to the input (1) of the first channel and the associated reference potential (OV) of the DC supply voltage can be fed to the input (14) of the second channel.

**14.** Apparatus according to claim 13, **characterised in that** it has a readback path (W1, W2), via which readback signals (r1, r2) derived from the output (4, 16) are transmitted.

**15.** Apparatus according to claim 14, **characterised in that** it has a readback path (W2) exiting from the output (4) of the first channel and leading to the controller (17) arranged in the second channel, and a readback path (W1) exiting from the output (16) of the second channel and leading to the controller (8) arranged in the first channel.

**16.** Apparatus according to one of claims 13, 14 or 15, **characterised in that** the controllers (8, 17) of the two channels are contacted with each other via an interface (21).

**17.** Method for detecting fault conditions in the energy supply of a load (5), which is connected via a first output driver (3) to an input (1) for a DC supply voltage, wherein a series connection of a second output driver (6) to a measuring resistor (7) is provided in parallel to the first output driver (3), **characterised in that** the second output driver (6) is activated only for short measuring time intervals in order to connect the measurement resistor (7) only for the duration of these short measuring time intervals between the input (1) for the DC supply voltage and the load (5), and that the first output driver (3) is deactivated for the duration of the short measuring time intervals.

**18.** Method according to claim 17, **characterised in that** the voltage drop at the measuring resistor (7) is measured during the measuring time intervals.

**19.** Method according to claim 18, **characterised in that** measurement signals are fed to a first input (+) of a differential amplifier (11) from a terminal of the measuring resistor (7), measurement signals are fed to a second input (-) of the differential amplifier (11) from the second terminal of the measuring resistor (7) and the differential signals ($I_D$) generated by means of the differential amplifier (11) are fed to a first controller (8).

**20.** Method according to claim 19, **characterised in that** the first controller (8) compares the differential signals ($I_D$) with predetermined threshold values in order to perform a wire-break detection and/or an overload detection.

**21.** Method according to one of claims 17 to 20, **characterised in that** DC supply voltage present at the input (1) is measured and the measurement value (UM) obtained is used to calculate a measurement error.

**22.** Method according to one of claims 17 to 21, **characterised in that** a zero-current reference measurement is performed.

**23.** Method according to claim 22, **characterised in that** the zero-current reference value determined is subtracted from the differential signals ($I_D$) determined.

**24.** Method according to one of claims 17 to 23, **characterised in that** data describing the time progression of the current consumption of the load (5) is stored.

**25.** Method according to claim 24, **characterised in that** the stored data is evaluated to detect an impending failure of an actuator.

**Revendications**

**1.** Dispositif de détection de conditions de défauts dans l'alimentation en énergie d'une charge ( 5 ), comprenant

- une entrée ( 1 ) pour une tension continue d'alimentation,

- une sortie ( 4 ) pour la tension continue d'alimentation,
- un premier circuit (3) d'attaque de sortie monté entre l'entrée ( 1 ) et la sortie ( 4 ),
- une résistance ( 7 ) de mesure, et
- une première unité ( 8 ) de commande, qui est prévue pour la commande du premier circuit ( 3 ) d'attaque de sortie et à laquelle des signaux de mesure déduits de la résistance ( 7 ) de mesure sont envoyés,
**caractérisé en ce que**
- la résistance ( 7 ) de mesure est montée en série avec un deuxième circuit ( 6 ) d'attaque de sortie,
- le montage série du deuxième circuit ( 6 ) d'attaque de sortie et de la résistance ( 7 ) de mesure est monté en parallèle au premier circuit ( 3 ) d'attaque de sortie,
- la première unité (8) de commande est prévue pour la commande du deuxième circuit ( 6 ) d'attaque de sortie et
- la première unité ( 8 ) de commande est prévue pour activer le deuxième circuit ( 6 ) d'attaque de sortie, seulement pendant de brefs intervalles de temps de mesure, de manière à ce que la résistance ( 7 ) de mesure ne soit montée entre l'entrée ( 1 ) et la sortie ( 4 ) que pendant la durée de ces brefs intervalles de temps de mesure et pour désactiver le premier circuit ( 3 ) d'attaque de sortie pendant la durée des brefs intervalles de temps de mesure.

2. Dispositif suivant la revendication 1,
**caractérisé en ce qu'**il est prévu pour la mesure de la chute de tension aux bornes de la résistance ( 7 ) de mesure.

3. Dispositif suivant la revendication 2,
**caractérisé en ce qu'**une borne de la résistance ( 7 ) de mesure est reliée à une première entrée ( + ) d'un amplificateur ( 11 ) différentiel et l'autre borne de la résistance ( 7 ) de mesure à une deuxième entrée ( - ) de l'amplificateur différentiel et **en ce que** la sortie de l'amplificateur ( 11 ) différentiel est reliée à la première unité ( 8 ) de commande.

4. Dispositif suivant la revendication 3,
**caractérisé en ce que** la sortie de l'amplificateur ( 11 ) différentiel est reliée à une entrée ( 8a ) de convertisseur A/N de la première unité ( 8 ) de commande.

5. Dispositif suivant l'une des revendications précédentes,
**caractérisé en ce que** la première unité ( 8 ) de commande compare les signaux ( $I_D$ ) de différence, qui lui sont envoyés, à de valeurs de seuil prescrites pour effectuer une détection d'une rupture de fil et/ou d'une surcharge.

6. Dispositif suivant la revendication 5,
**caractérisé en ce que** les valeurs de seuil prescrites peuvent être modifiées au moyen d'une unité ( 8b ) de service reliée à la première unité ( 8 ).

7. Dispositif suivant l'une des revendications précédentes,
**caractérisé en ce qu'**il a un voltmètre ( 2 ) qui est prévu pour la mesure de la tension continue d'alimentation et qui a une sortie reliée à la première unité ( 8 ) de commande.

8. Dispositif suivant la revendication 7,
**caractérisé en ce que** la première unité ( 8 ) de commande calcule une erreur de mesure en utilisant la valeur ( UM ) de mesure de tension produite par le voltmètre ( 2 ).

9. Dispositif suivant l'une des revendications précédentes,
**caractérisé en ce qu'**il est prévu pour effectuer une mesure de référence à courant zéro.

10. Dispositif suivant la revendication 9,
**caractérisé en ce que** la première unité ( 8 ) de commande soustrait la valeur de référence à courant zéro déterminée du signal ( $I_D$ ) de différence, qui lui est envoyé.

11. Dispositif suivant l'une des revendications précédentes,
**caractérisé en ce qu'**il a une mémoire ( 8c ) qui est prévue pour la mémorisation de données qui décrivent la variation dans le temps de l'absorption du courant par la charge ( 5 ).

12. Dispositif suivant la revendication 11,
**caractérisé en ce que** la première unité ( 8 ) de commande est prévue pour l'exploitation des données mémorisées afin de détecter une défaillance imminente d'un actionneur.

**13.** Dispositif suivant l'une des revendications précédentes,
**caractérisé en ce qu'**il a un circuit parallèle de deux canaux, qui ont respectivement une entrée ( 1, 14 ) pour une tension continue d'alimentation, une sortie ( 4, 16 ) pour la tension continue d'alimentation, un circuit ( 3, 15 ) d'attaque de sortie monté entre l'entrée ( 1, 14 ) respective et la sortie ( 4, 16 ) respective et une unité ( 8, 17 ) respective de commande qui est prévue pour la commande du circuit ( 3, 15 ) d'attaque de sortie respective, une tension continue d'alimentation positive pouvant être appliquée à l'entrée ( 1 ) du premier canal et la masse ( OV ) associée de la tension continue d'alimentation pouvant être appliquée à l'entrée ( 14 ) du deuxième canal.

**14.** Dispositif suivant la revendication 13,
**caractérisé en ce qu'**il a un trajet ( W1, W2 ) de relecture, par lequel des signaux ( r1, r2 ) de relecture dérivés de la sortie ( 4, 16 ) sont transmis.

**15.** Dispositif suivant la revendication 14,
**caractérisé en ce qu'**il a un trajet ( W2 ) de relecture partant de la sortie ( 4 ) du premier canal et menant à l'unité ( 17 ) de commande montée dans le deuxième canal et à un trajet ( W1 ) de relecture partant de la sortie ( 16 ) du deuxième canal et allant à l'unité ( 8 ) de commande montée dans le premier canal.

**16.** Dispositif suivant la revendication 13, 14 ou 15,
**caractérisé en ce que** les unités ( 8, 17 ) de commande des deux canaux sont en contact l'une avec l'autre par une interface ( 21 ).

**17.** Procédé de détection de conditions d'erreurs dans l'alimentation en énergie d'une charge ( 5 ), qui est reliée par un premier circuit ( 3 ) d'attaque de sortie à une entrée ( 1 ) d'une tension continue d'alimentation, un montage série d'un deuxième circuit (6) d'attaque de sortie et d'une résistance ( 7 ) de mesure étant prévu en parallèle au premier circuit ( 3 ) d'attaque de sortie, **caractérisé en ce que** le deuxième circuit ( 6 ) d'attaque de sortie n'est activé que pendant de brefs intervalles de temps de mesure pour ne brancher la résistance ( 7 ) de mesure que pendant la durée de ces brefs intervalles de temps de mesure entre l'entrée ( 1 ) de la tension continue d'alimentation et la charge ( 5 ), et **en ce que** le premier circuit ( 3 ) d'attaque de sortie est désactivé pendant la durée des brefs intervalles de temps de mesure.

**18.** Procédé suivant la revendication 17,
**caractérisé en ce que** l'on mesure la chute de tension aux bornes de la résistance ( 7 ) de mesure pendant les intervalles de temps de mesure.

**19.** Procédé suivant la revendication 18,
**caractérisé en ce que** l'on envoie des signaux de mesure d'une borne de la résistance ( 7 ) de mesure à une première entrée ( + ) d'un amplificateur ( 11 ) différentiel, on envoie des signaux de mesure de la deuxième borne de la résistance ( 7 ) de mesure à une deuxième entrée ( - ) d'une amplificateur ( 11 ) différentiel et on envoie les signaux ( $I_D$ ) de différence produits au moyen de l'amplificateur ( 11 ) différentiel à une première unité ( 8 ) de commande.

**20.** Procédé suivant la revendication 19,
**caractérisé en ce que** la première unité ( 8 ) de commande compare les signaux ( $I_D$ ) de différence à des valeurs de seuil prescrites pour effectuer une détection d'une rupture de fil et/ou d'une surcharge.

**21.** Procédé suivant l'une des revendications 17 à 20,
**caractérisé en ce que** l'on mesure la tension continue d'alimentation présente à l'entrée ( 1 ) et on utilise la valeur ( UM ) de mesure obtenue pour le calcul d'une erreur de mesure.

**22.** Procédé suivant l'une des revendications 17 à 21,
**caractérisé en ce que** l'on effectue une mesure de référence à courant zéro.

**23.** Procédé suivant la revendication 22,
**caractérisé en ce que** l'on soustrait la valeur de référence à courant zéro, qui a été déterminée, des signaux ( $I_D$ ) de différence, qui ont été déterminés.

**24.** Procédé suivant l'une des revendications 17 à 23,
**caractérisé en ce que** l'on mémorise des données décrivant la courbe dans le temps de l'absorption du courant par la charge ( 5 ).

**25.** Procédé suivant la revendication 24,
**caractérisé en ce que** l'on exploite les données mémorisées pour détecter une défaillance imminente d'un actionneur.

**FIG 1**

# FIG 2

EP 1 333 552 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4210420 C2

- DE 19833984 A1